# EUROPÄISCHE PATENTSCHRIFT

(11) **EP 1 148 518 B1**
(45) Veröffentlichungstag und Bekanntmachung des Hinweises auf die Patenterteilung: **26.11.2003**
(21) Anmeldenummer: 00401068.2
(22) Anmeldetag: 17.04.2000
(51) Int. Cl.: H01B 13/14, B29C 47/00, C08J 3/20

(54) **Verfahren zur Herstellung von mit vernetztem Polyethylen überzogenen Leitungsdrähten**
A process for producing cross-linked polyethylene coated conducting wires
Procédé de fabrication de fils conducteurs revêtus d'un polyéthylène réticulé

(43) Veröffentlichungstag der Anmeldung: 24.10.2001
(73) Patentinhaber: Nexans, 75008 Paris (FR)
(72) Erfinder: Dänekas, Franz, 30826 Garbsen (DE); Strittmatter, Marc, Dr., 30459 Hannover (DE)
(74) Vertreter: Döring, Roger, Dipl.-Ing.

(56) Entgegenhaltungen:
- DE-A- 1 494 046
- DE-A- 3 035 709
- FR-A- 2 201 312
- US-A- 4 276 251

## Beschreibung

Die Erfindung betrifft ein Verfahren nach dem Oberbegriff des Anspruchs 1.

Aus der DE 14 94 046 ist ein Verfahren zur Herstellung von mit vernetztem Polyethylen überzogenen elektrischen Leitern bekannt, bei welchem ein Polyethylengranulat bei Normaldruck mit einem geschmolzenen Vernetzungsmittel überzogen wird, das Granulat in einem Extruder geschmolzen, homogenisiert und die Schmelze auf den elektrischen Leiter aufgebracht wird. Als Vernetzungsmittel wird geschmolzenes Dicumylperoxid verwendet. Die Vernetzung der Isolierschicht erfolgt in einer kontinuierlichen Vulkanisationsanlage (Vernetzungsanlage) bei einer Temperatur, die oberhalb der Zersetzungstemperatur des Vernetzungsmittels liegt, sowie bei einem erhöhten Druck.

Mittelspannungs- oder Hochspannungskabel mit einer Isolierschicht aus Polyethylen weisen unter Umständen Defekte in Form von Hohlräumen, Verunreinigungen sowie Oberflächenfehler auf, die zu einer sogenannten elektrischen Bäumchenbildung führen können. In Gegenwart von Feuchtigkeit und elektrischer Belastung können sogenannte Wasserbäumchen auftreten, die zu einer Zerstörung der Isolierschicht führen. Man hat versucht, diese Nachteile dadurch zu vermeiden, daß man eine sogenannte Dreifachextrusion anwendete, d. h. innere Leitschicht, Isolierschicht und äußere Leitschicht wurden durch Koextrusion mittels eines Dreifachspritzkopfes gleichzeitig erzeugt. Dadurch konnten Verunreinigungen und Hohlräume in der Isolierschicht bzw. zwischen den Schichten minimiert werden.

Ein anderer Weg ging dahin, anstelle der Dampfvernetzung eine Trockenvernetzung durchzuführen, wobei die Wärme durch Strahlung auf die Kabelisolierung übertragen wurde.

Beide Lösungen haben nicht vollauf befriedigen können. Es ist auch versucht worden, den Isolierwerkstoff zu optimieren. So ist beschrieben, dem Polyethylen bei seiner Herstellung sog. Wasserbäumchen-Inhibitoren zuzusetzen, die sich von Polymeren ableiten, wie z. B. Organopolysiloxane, Polyethylenglycole, Epoxidharze, Polypropylen, Polystyrol, Polyvinylalkohol. Die gewünschten Effekte und die Beeinflussung des Wasserbäumchen-wachstums sind sehr unterschiedlich. In vielen Fällen wirken sich die Zusätze nachteilig auf die Homogenität und die Alterungsbeständigkeit des Polyethylens sowie auf die elektrischen Eigenschaften des Isolierwerkstoffes aus.

Der vorliegenden Erfindung liegt von daher die Aufgabe zugrunde, ein Verfahren zur Herstellung von Mittel- und/oder Hochspannungskabeln anzugeben, welches wesentlich kostengünstiger als die bisher bekannten Verfahren ist und Kabel bereitstellt, die eine höhere Beständigkeit gegen die Bildung von Wasserbäumchen und somit eine höhere Lebensdauer aufweisen.

Diese Aufgabe wird durch die im Kennzeichen des Anspruchs 1 erfaßten Merkmale gelöst. Weitere vorteilhafte Ausgestaltungen sind in den Unteransprüchen erfaßt.

Der wesentliche Vorteil der Erfindung ist darin zu sehen, daß durch die Verwendung eines Gemisches aus Polyethylen Homopolymer und Polyethylen Copolymer mit einem begrenzten Copolymeranteil die Beständigkeit der Kabelisolierung gegen die Bildung von Wasserbäumchen wesentlich erhöht werden kann. Es kann ein Polyethylen Homopolymer eingesetzt werden, welches kostengünstig von zahlreichen Polymerherstellern überwiegend für die Verarbeitung zu Polyethylenfolien sozusagen als Massenware angeboten wird. Es kann somit auf teure "Spezialitäten" der Polymerhersteller verzichtet werden.

Die Erfindung ist anhand einiger Ausführungsbeispiele näher erläutert.

### Beispiel 1

Es werden 80 Teile LDPE mit einer Dichte von ca. 0,92 g/ccm als Granulat und 20 Teile Polyethylen Copolymer als Granulat, zusammen mit 2 Teilen Dicumylperoxid oder Tert. Butylcumylperoxid und 0,2 Teilen Stabilisator in einem oberhalb des Einzugsbereichs eines Extruders befindlichen Mischaggregats miteinander vermischt. Um die Diffusion des Peroxids bzw. Stabilisators in das Granulat zu beschleunigen, wird das Granulat vorher auf eine Temperatur zwischen 50 und 80 °C erwärmt. Nach dem Einzug des Materials in den Extruder wird das Material aufgeschmolzen, homogenisiert und auf den Leiter extrudiert. Die Vernetzung erfolgt unter Druck in einem sogenannten CV-Rohr (Continuous vulcanisation) mit Temperaturen oberhalb der Zersetzungstemperatur des Peroxids durch Wärmezufuhr von außen.

In einer anschließenden Kühlstrecke wird das Kabel ebenfalls unter Druck auf Temperaturen unterhalb der Polyethlylen Schmelztemperatur abgekühlt und auf eine Kabeltrommel aufgewickelt.

### Beispiel 2

Die gleiche Mischzusammensetzung wie in Beispiel 1 wird in einem Taumelmischer bei einer Temperatur zwischen 50 - 80 °C gemischt, wobei Peroxid und Stabilisator in das Granulat eindiffundieren. Die Mischung kann in Container verpackt gelagert und später zur Fertigungsanlage transportiert werden. Die Mischung wird in den Trichter des Extruders eingefüllt, innerhalb des Extruders aufgeschmolzen, homogenisiert und auf den Leiter extrudiert. Die anschließenden Arbeitsschritte sind wie im Beispiel 1

### Beispiel 3

Es werden 80 Teilen LDPE und 20 Teilen PE Copolymer in einem Arbeitsgang zusammen mit einem hochkonzentrierten Peroxid / Stabilisator Batch auf Polymerbasis gemischt und anschließend direkt dem Extruder zugeführt.

Eine Vorwärmung der Granulate zur schnelleren Eindiffusion von Peroxid und Stabilisator ist dabei nicht erforderlich.

Die anschließenden Arbeitsschritte sind wie in Beispiel 1 und 2.

### Ergebnisse

Proben der nach den Beispielen 1 bis 3 hergestellten Modellkabel wurden vor und nach einem Wet Ageing Test auf elektrische Durchschlagsfestigkeit geprüft.

Gegenüber den Ergebnissen von mit Polyethylen Homopolymer isolierten Kabeln konnte mit diesem Verfahren die elektrische Durchschlagsfestigkeit nach Wet Ageing gravierend verbessert werden.

## Patentansprüche

1. Verfahren zur Herstellung eines Kabels bestehend aus einem mit vernetztem Polyethylen überzogenen Leitungsdraht bei dem ein Granulat aus Polyethylen mit einem flüssigen Vernetzungsmittel überzogen wird, das überzogene Granulat in einem Extruder aufgeschmolzen und auf den elektrischen Leitungsdraht extrudiert und die extrudierte Schicht durch Erwärmen auf eine Temperatur oberhalb der Zersetzungstemperatur des Vernetzungsmittels vernetzt wird, **dadurch gekennzeichnet, daß** ein Gemisch aus Granulat, Gries oder Pulver aus einem Polyethylen Homopolymer und einem Polyethylen Copolymer mit dem Vernetzungsmittel und Stabilisator überzogen wird, wobei der Copolymeranteil in dem Überzug auf dem Kabel zwischen 1 und 8 Gew.% liegt.

2. Verfahren nach Anspruch 1, **dadurch gekennzeichnet, daß** das Polyethylen Homopolymer und das Polyethylen Copolymer in einem Taumelmischer bei einer erhöhten Temperatur jedoch unterhalb der Schmelztemperatur des Polyethylen Homopolymers bzw. Polyethylen Copolymers gemischt und gleichzeitig mit einem flüssigen Gemisch aus Vernetzungsmittel und Stabilisator überzogen wird.

3. Verfahren noch Anspruch 1, **dadurch gekennzeichnet, daß** das Polyethylen Homopolymer und das Polyethylen Copolymer in einem Taumelmischer bei Raumtemperatur oder erhöhten Temperatur jedoch unterhalb der Schmelztemperatur des Polyethylen Homopolymers bzw. des Polyethylen Copolymers gemischt und gleichzeitig mit einem hochkonzentrierten Peroxid / Stabilisator Batch auf Polymerbasis versehen wird.

4. Verfahren nach Anspruch 1, **dadurch gekennzeichnet, daß** das Polyethylen Homopolymer und das Polyethylen Copolymer in einem dem Isolierextruder vorgelagerten Mischaggregat miteinander vermischt und gleichzeitig mit einem flüssigen Gemisch aus Vernetzungsmittel und Stabilisator oder einem hochkonzentrierten Peroxid / Stabilisator Batch auf Polymerbasis versetzt wird.

5. Verfahren nach Anspruch 4, **dadurch gekennzeichnet, daß** das Mischen und Überziehen bei Raumtemperatur oder einer erhöhten Temperatur jedoch unterhalb der Schmelztemperatur des Polyethylen Homopolymers und des Polyethylen Copolymers, vorzugsweise zwischen 50 und 80°C erfolgt.

6. Verfahren nach einem der Ansprüche 1 bis 5, **dadurch gekennzeichnet, daß** in einem vorgezogenen Arbeitsgang ein hochkonzentrierter Peroxid / Stabilisator Batch auf Basis LDPE, LLDPE, VLDPE und / oder Polyethylen Copolymer mit einem Gehalt an Vernetzungsmittel und Stabilisator zwischen 1 und 40 Gew. % hergestellt und dieses Batch mit Granulat, Gries oder Pulver aus Polyethylen Homopolymer und/oder Polyethylen Copolymer vermischt und anschließend geschmolzen und extrudiert wird.

7. Verfahren nach Anspruch 1 bis 6, **dadurch gekennzeichnet, daß** ein Polyethylen Copolymer mit einem Copolymeranteil von über 16 Gew. % verwendet wird.

8. Verfahren nach einem der Ansprüche 1 bis 7, **dadurch gekennzeichnet, daß** als Polyethylen Homopolymer LDPE, LLDPE und/oder VLLDPE verwendet wird.

9. Verfahren nach einem der Ansprüche 1 bis 8, **dadurch gekennzeichnet, daß** als Polyethylen Copolymer Ethylenvinylacetat (EVA), Ethylenbutylacrylat (EBA), Ethylenethylacrylat (EEA) und/oder Ethylenmethylacrylat (EMA) mit einem Copolymeranteil von 10 bis 30 Gew.% verwendet wird.

10. Verfahren nach einem der Ansprüche 1 bis 9, **dadurch gekennzeichnet, daß** als Vernetzungsmittel ein Peroxid, vozugsweise tert. Butylcumylperoxid verwendet wird.

11. Verfahren nach einem der Ansprüche 1 bis 10, **dadurch gekennzeichnet, daß** neben dem Peroxid als Vernetzungsmittel ein Covernetzer, vorzugsweise Triallylcyanurat verwendet wird.

## Claims

1. A method for manufacturing a cable consisting of a conductor coated with crosslinked polyethylene, wherein a polyethylene granulate is covered with a liquid crosslinking agent, the covered granulate is melted in an extruder and extruded onto the electric conductor, and the extruded layer is crosslinked by heating it to a temperature above the decomposition temperature of the crosslinking agent, **characterized in that** a mixture of granulate, grain, or powder of a polyethylene homo-polymer and a polyethylene copolymer is covered with the crosslinking agent and a stabilizer, wherein the copolymer component in the cable cover is between 1 and 8 % by weight.

2. A method according to claim 1, **characterized in that** the polyethylene homo-polymer and the polyethylene copolymer are mixed in an eccentric tumbler at an elevated temperature, but at a temperature below the melting point of the polyethylene homo-polymer or the polyethylene copolymer, respectively, and at the same time is covered with a liquid mixture of an crosslinking agent and a stabilizer.

3. A method according to claim 1, **characterized in that** the polyethylene homo-polymer and the polyethylene copolymer are mixed in an eccentric tumbler at an elevated temperature, but at a temperature below the melting point of the polyethylene homo-polymer or the polyethylene copolymer, respectively, and at the same time a highly concentrated batch of peroxide and a stabilizer on polymer basis is added to it.

4. A method according to claim 1, **characterized in that** the polyethylene homo-polymer and the polyethylene copolymer is mixed in a mixing aggregate in line before the insulating extruder and at the same time a liquid mixture of an crosslinking agent and a stabilizer or a highly concentrated batch of peroxide and a stabilizer on polymer basis is added to it.

5. A method according to claim 4, **characterized in that** mixing and coating takes place at room temperature or at an elevated temperature, but below the melting point of the polyethylene homo-polymer and the polyethylene copolymer, preferably between 50 and 80 °C.

6. A method according to one of the claims 1 to 5, **characterized in that** in a previous processing step a highly concentrated batch of peroxide and stabilizer on the basis of LDPE, LLDPE, VLDPE and/or polyethylene copolymer is produced, wherein the content of crosslinking agent and stabilizer is between 1 and 40 % by weight and this batch is mixed with a granulate, grain, or powder of polyethylene homo-polymer and/or polyethylene copolymer and subsequently melted and extruded.

7. A method according to one of the claims 1 to 6, **characterized in that** a polyethylene copolymer with a copolymer share of more than 16% by weight is used.

8. A method according to one of the claims 1 to 7, **characterized in that** LDPE, LLDPE and/or VLLDPE is used as the polyethylene homo-polymer.

9. A method according to one of the claims 1 to 8, **characterized in that** ethylene vinyl acetate (EVA), ethylene-butyl acrylate (EBA), ethylene-ethyl acrylate (EEA) and/or ethylene-methyl acrylate (EMA) with a copolymer component of 10 to 30% by weight is used as the polyethylene copolymer.

10. A method according to one of the claims 1 to 9, **characterized in that** a peroxide, preferably tert-butyl cumyl peroxide, is used as the crosslinking agent.

11. A method according to one of the claims 1 to 10, **characterized in that** apart from the peroxide, a co-crosslinking agent is used as crosslinking agent, preferably triallyl cyanurate.

## Revendications

1. Procédé pour la fabrication d'un câble se composant d'un fil conducteur revêtu de polyéthylène réticulé pour lequel une matière granuleuse de polyéthylène est revêtue d'un agent de réticulation liquide, la matière granuleuse revêtue est fusionnée dans une extrudeuse et extrudée sur le fil conducteur électrique et la couche extrudée est réticulée en la chauffant à une température supérieure à la température de désintégration de l'agent de réticulation, **caractérisé en ce qu'**un mélange composé de matière granuleuse, de gravier ou de poudre d'un homopolymère de polyéthylène et d'un copolymère de polyéthylène est revêtu d'un agent de réticulation et d'un stabilisant, en ce sens que le taux de copolymère représente dans le revêtement du câble entre 1 et 8 % de la masse.

2. Procédé selon la revendication 1 **caractérisé en ce que** l'homopolymère de polyéthylène et le copolymère de polyéthylène sont mélangés dans un mélangeur à une température élevée mais pourtant inférieure à la température de fusion de l'homopolymère de polyéthylène ou bien du copolymère de polyéthylène et qu'ils sont revêtus simultanément d'un mélange liquide d'agent de réticulation et de stabilisant.

3. Procédé selon la revendication 1 **caractérisé en ce que** l'homopolymère de polyéthylène et le copolymère de polyéthylène sont mélangés dans un mélangeur à température ambiante ou à une température élevée mais pourtant inférieure à la température de fusion de l'homopolymère de polyéthylène ou bien du copolymère de polyéthylène et qu'ils sont pourvus simultanément d'un lot de peroxyde ou de stabilisant hautement concentré à base de polymère.

4. Procédé selon la revendication 1 **caractérisé en ce que** l'homopolymère de polyéthylène et le copolymère de polyéthylène sont mélangés dans une trémie précédant l'extrudeuse isolante et transférés en même temps à un mélange liquide d'agent de réticulation ou de stabilisant ou à un lot de peroxyde ou de stabilisant hautement concentré à base de polymère.

5. Procédé selon la revendication 4 **caractérisé en ce que** le mélange et le revêtement a lieu à température ambiante ou à une température élevée pourtant inférieure à la température de fusion de l'homopolymère de polyéthylène et du copolymère de polyéthylène, de préférence entre 50 et 80°C.

6. Procédé selon l'une des revendications 1 à 5 **caractérisé en ce que**, dans un processus anticipé de travail, un lot très concentré peroxyde/stabilisant à base de polyéthylène basse densité, de polyéthylène à basse densité linéaire, de polyéthylène à très basse densité linéaire et/ou de copolymère de polyéthylène d'une contenance d'agent de réticulation et de stabilisateur entre 1 et 40 % de la masse est fabriqué et ce lot est mélangé avec de la matière granuleuse, du gravier ou de la poudre d'homopolymère de polyéthylène et/ou de copolymère de polyéthylène et est enfin fondu et extrudé.

7. Procédé selon les revendications 1 à 6 **caractérisé en ce qu'**un copolymère de polyéthylène est utilisé avec une teneur de copolymère supérieur à 16 % de la masse.

8. Procédé selon l'une des revendications 1 à 7 **caractérisé en ce que** du polyéthylène basse densité, du polyéthylène à basse densité linéaire et/ou du polyéthylène à très basse densité linéaire sont utilisés comme homopolymère de polyéthylène.

9. Procédé selon l'une des revendications 1 à 8 **caractérisé en ce que** de l'éthylène-acétate de vinyle ( EVA), l'éthylène-acrylate de butyle (EBA), l'éthylène-acrylate d'éthyle (EEA) et/ou l'éthylène-acrylate de méthyle (EMA) sont utilisés comme copolymères de polyéthylène avec une masse de copolymère de 10 à 30 %.

10. Procédé selon l'une des revendications 1 à 9 **caractérisé en ce qu'**un peroxyde, de préférence du peroxyde de Tert-Butyl Cumyle est utilisé comme agent de réticulation.

11. Procédé selon l'une des revendications 1 à 10 **caractérisé en ce que** en plus du peroxyde, un réticulant de couverture, de préférence du trially cyanurate est utilisé comme agent de réticulation.
